# EUROPEAN PATENT APPLICATION

(11) **EP 2 080 997 A1**
(43) Date of publication of application: **22.07.2009**
(21) Application number: 09250111.3
(22) Date of filing: 16.01.2009
(51) Int. Cl.: G01F 19/00, B65D 21/00, B65D 25/00, B65D 81/00

(54) **Collapsible measuring cup with pivoting handle**

(30) Priority: 18.01.2008 US 16939
(71) Applicant: Dexas International, Ltd., Coppell, TX 75019 (US)
(72) Inventor: Shamoon, Ellis N., Dallas, Texas 75219 (US); Murphy, Thomas B., Arlington, Texas 76013 (US)
(74) Representative: Millburn, Julie Elizabeth

(57) **Abstract**

A cup (10) for containing or measuring liquids includes a rigid annular portion (14) maintaining the shape of the opening of the cup (10), secured to a cup portion formed of a flexible material (12), such as silicone. A movable handle (28) secures to the annular portion (14) which serves a dual function of securing the rigidity of the cup (10) in the open position, and rotating sideways to accommodate storage when in the closed position.

## Description

### FIELD OF THE INVENTION

This invention relates generally to cooking tools and, more particularly, to measuring cups.

### BACKGROUND OF THE INVENTION

Many individuals who cook are faced with the need for compact measuring utensils when kitchen space is at a premium, such as in apartments or while traveling, but also desire the ease-of-use and rigidity found in normal measuring utensils. Existing collapsible cups incorporate a number of design features that sacrifice ease of use and reliability for portability. Examples include nesting measuring cups or collapsible cups that incorporate flat, fixed handles that allow for flat compression but require the user to employ an awkward or uncomfortable grip when in use. Other examples incorporate an opaque flexible cup membrane that is difficult to read volume measurements from, or a membrane with inadequate structural support, potentially spilling contents due to the lack of rigid support and complicating use. Current flexible membranes typically employ hinges and baffles to shape the membrane into its different configurations, but these features often create a non-uniform interior cup surface with grooves and troughs where food collect, making cleaning and emptying the cup membrane cumbersome.

The present invention provides a solution to these problems in the form of a collapsible measuring cup with a collapsible cup membrane with a smooth interior surface that incorporates a movable handle that facilitates flat compression during storage, and provides structural support to the extended membrane while in use and also allows the user to employ a natural grip similar to that used in rigid measuring cups. The membrane may optionally be formed of a translucent or clear, light-transmissive material to facilitate accurate measuring by visual observation of fluid level from the exterior of the cup.

The space saving features of this invention become very useful, for example, in kitchens with minimal storage area, but more importantly, inside dishwashers where space is at a premium. Flexible membrane measuring cups in the prior art are notoriously difficult to clean due to the many troughs and grooves in the interior cup surface where food and other particles collect, and rigid measuring cups take up a great deal of space. This invention performs the duties of a full-sized rigid measuring cup with the added benefit of collapsing to a smaller, more efficient size for storage and dishwasher cleaning.

In the embodiment of the invention shown herein, a rigid support frame with a pivotally connected movable handle provides a self-supporting flexible membrane measuring cup that is shaped to facilitate the novel function of the invention. The pivoting handle is attached at the perimeter of the rigid support frame and may be manually rotated upward so that it becomes parallel to the support frame. This allows a full sized measuring cup to fit into an unusually small storage space. Other equivalent methods of supporting the membrane are possible, and it is not intended to limit this invention to any particular means of membrane support.

### BRIEF DESCRIPTION OF THE DRAWINGS

A more complete understanding of the invention and its advantages will be apparent from a review of the Detailed Description in conjunction with the following Drawings, in which:
FIG. 1 is a perspective view of a collapsible measuring cup in the storage configuration which includes the present invention;
FIG. 2 is a rear view of the cup of FIG. 1;
FIG. 3 is a top view of the cup of FIG. 1;
FIG. 4 is a sectional view taken along lines 4-4 of FIG. 3;
FIG. 5 is a side view of the collapsible measuring cup in its use configuration; and
FIG. 6 is a perspective view of the cup in its use configuration.

### DETAILED DESCRIPTION

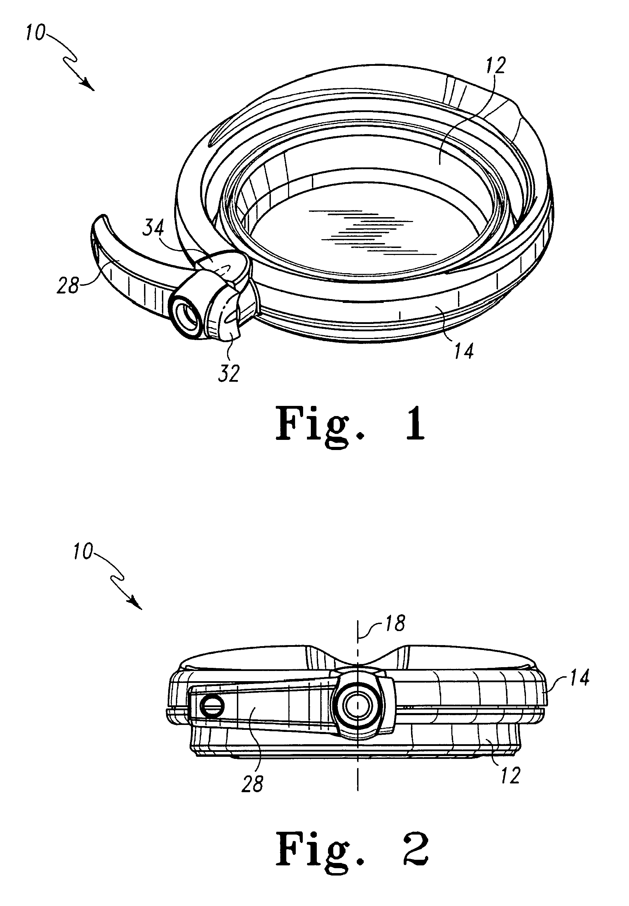

Referring initially to FIGS. 1-6, where like numerals indicate like and corresponding elements, measuring cup 10 includes a flexible, integrally elastomeric membrane 12 comprised of a clear or translucent material and supported by a rigid support frame 14 about a perimeter 16 of the membrane 12. "Flexible" is used in its ordinary sense to mean easily bendable.

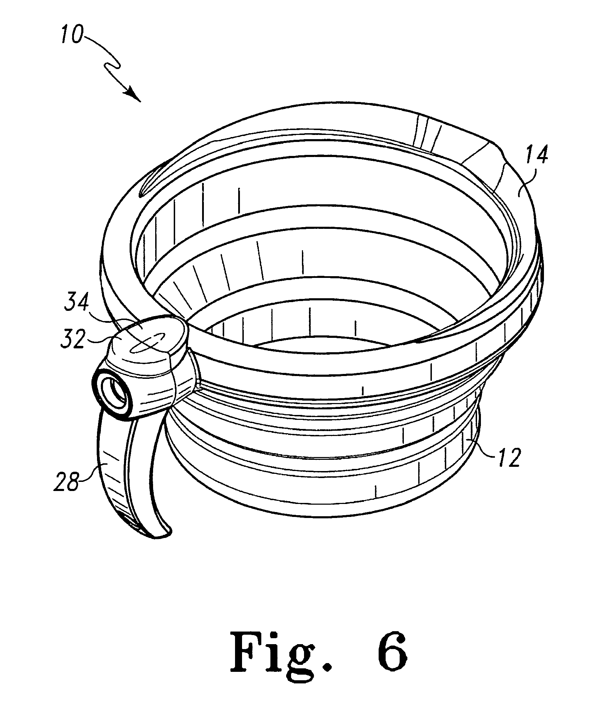

The membrane 12 has at least two selectable configurations, as shown in FIGS. 1 and 6.

The two selectable configurations are a near-flat storage configuration (FIG. 1) and an extended use configuration (FIG. 6). In the storage configuration, membrane 12 is approximately the same width as frame 14. In the use configuration, membrane 12 is extended from frame 14 to form an open-topped container or cup.

A key feature of the invention is that the membrane 12 is formed to be stable in both the storage and use configurations. This enables the user to select either configuration which the membrane 12 will then statically hold indefinitely until it is shifted to the other configuration.

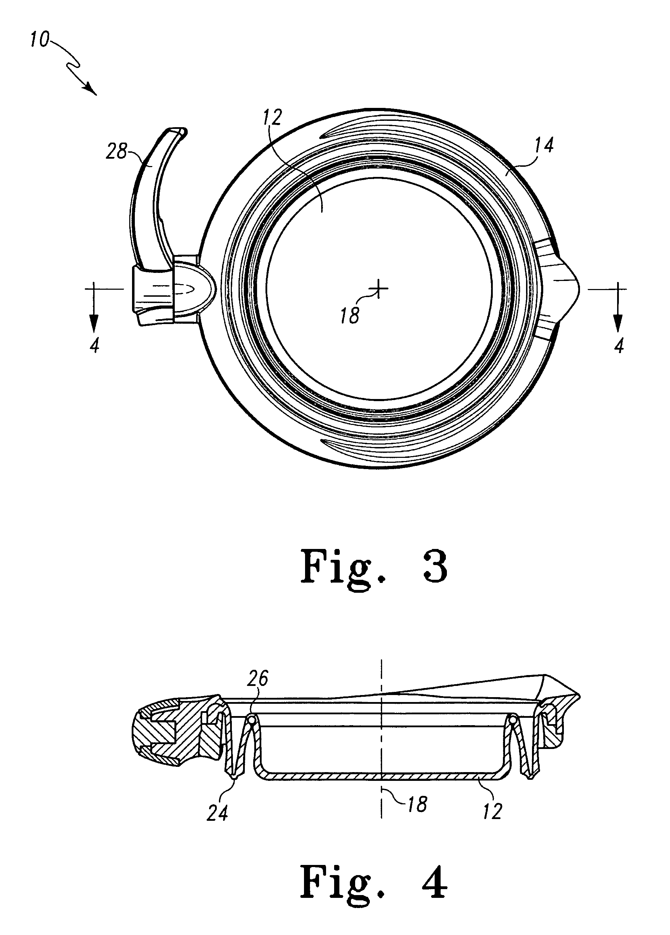

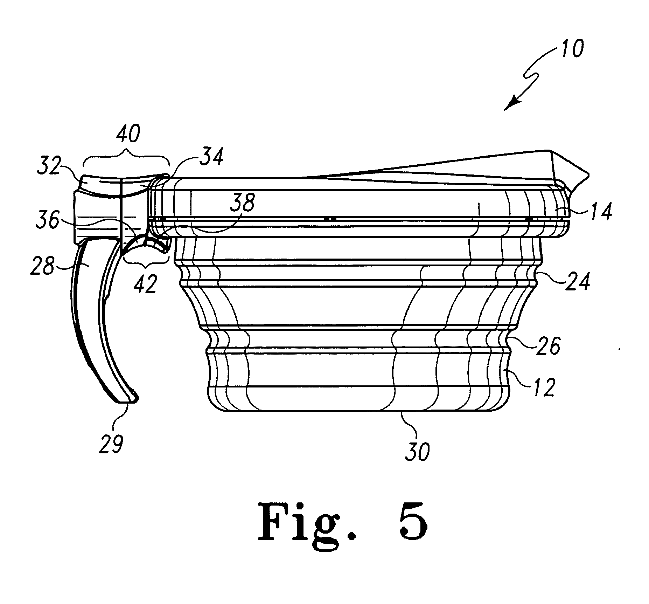

One way to provide this feature is to form the membrane 12 to have circular cross-sections about a central axis 18 (FIGS. 2-4). The membrane 12 has an inner surface 20 and an outer surface 22 (FIG. 4), the inner surface being substantially smooth when the membrane is in the use configuration (FIG. 5), and the outer surface having at least one, and in this embodiment, two inwardly-concave hinge areas 24, 26 where the membrane folds in the storage configuration (FIG. 4). The hinge areas 24, 26 are reduced in thickness compared to the other regions of the membrane 12, such that they are even more flexible and deformable than the rest of the membrane 12 which more strongly resists deformation.

Another key feature is a movable handle 28 pivotally-connected to the support frame 14.

In the use configuration (FIG. 5), the handle 28 is pivoted substantially perpendicular to the support frame 14 and has an end 29 that extends substantially parallel to the plane of planar bottom surface 30 (FIG. 5) of the membrane 12. Thus the handle 28 prevents the membrane 12 from folding when the membrane 12 and handle 28 are in the use configurations (FIG. 5). The handle 28 and support frame 14 each have an upper concave grip surface 32, 34, and a lower concave grip surface 36, 38 (FIG. 5). The grip surfaces 32, 34, 36, 38 are arranged and adapted to form thumb and finger indentations 40 and 42, respectively, when the handle is in the use configuration (FIG. 5). The indentations facilitate a natural handle grip that also serves to prevent pivotal handle movement during use of the cup 10.

One example of the membrane 12 is formed of silicone rubber. The membrane 12 is light-transmissive, i.e., either clear or translucent with measurement markings on the inner surface of the membrane to allow for easy volumetric readings from a number of different perspectives.

In operation, in its storage configuration, the flexible membrane is in a near flat shape, suspended at its perimeter by a support frame. For use, the measuring cup is taken out of its storage space and the user changes the cup to its use configuration by manually expanding the membrane downward while gripping the support frame. The handle is then extended downward by gripping the support frame and pivoting the handle downward into its use configuration. The measuring cup can then be used for food preparation in a manner consistent with the prior art.

## Claims

1. A cup (10) comprising a flexible membrane (12).

2. A cup (10) according to claim 1 where the membrane (12) is integrally formed of an elastomeric material and has at least two selectable configurations.

3. A cup (10) according to claim 2 where the two selectable configurations are a near-flat storage configuration and a use configuration wherein the membrane (12) forms an open-topped container.

4. A cup (10) according to claim 3 where the membrane (12) has an inner surface (20) and an outer surface (22), the inner surface (20) being substantially smooth when the membrane (12) is in the use configuration, and the outer surface (22) having at least one inwardly-concave hinge area (24, 26) where the membrane (12) is folded in the storage configuration.

5. A cup according to any of claims 1 to 4 where the membrane (12) is connected to a rigid support frame (14) about a perimeter (16) of the membrane (12).

6. A cup according to claim 5 further comprising a movable handle (28) pivotally-connected to the support frame (14).

7. A cup (10) according to claim 6 where the handle (28) has at least two selectable handle configurations.

8. A cup (10) according to claim 7 where the at least two selectable handle configurations include a storage configuration wherein the handle (28) is substantially parallel to the support frame (14), and a use configuration wherein the handle (28) is pivoted substantially perpendicular to the support frame (14).

9. A cup (10) according to claim 8 where the handle (28) has an end (29), and the membrane (12) has a planar bottom surface (30), wherein the end lies substantially in the plane of the bottom surface (30) when the membrane (12) and handle (28) are in the use configurations such that the handle (28) prevents the membrane (12) from folding when the membrane (12) and handle (28) are in the use configurations.

10. A cup (10) according to claim 8 or 9 where the handle (28) and support frame (14) each have upper (32, 34) and lower (36, 38) inwardly-concave grip surfaces, the grip surfaces (32, 34, 36, 38) being arranged and adapted to form thumb (40) and finger (42) indentations when the handle (28) is in the use configuration, wherein the indentations (40, 42) prevent pivotal handle movement when a user's thumb and finger span the indentations (40, 42).

11. A cup (10) according to any preceding claim where the membrane (12) is comprised of a light-transmissive material.
